# EUROPEAN PATENT SPECIFICATION

(11) **EP 1 371 891 B1**
(45) Date of publication and mention of the grant of the patent: **14.01.2009**
(21) Application number: 03013083.5
(22) Date of filing: 11.06.2003
(51) Int. Cl.: F16L 13/02

(54) **Welded joint for metal pipes**
Schweissverbindung von Metallrohren
Joint de soudure de tuyaux métalliques

(30) Priority: 12.06.2002 AR 0202214
(43) Date of publication of application: 17.12.2003
(73) Proprietor: Formar S.A., Buenos Aires C1282AFT (AR)
(72) Inventor: Trivelli, Enrique, Buenos Aires C1282AFT (AR)
(74) Representative: Cohausz & Florack

(56) References cited:
- EP-A- 0 366 299
- EP-A- 0 617 220
- US-A- 5 104 152
- US-A- 5 348 211

## Description

The present invention relates to a welded joint for metal pipes provided with an inner lining which is resistant to fluids to be conveyed through said pipes, but which can be affected by welding heat according to the preamble of claim 1.

Pipelines used at present for fluid pipelines, e.g. for the petroleum industry, chemistry or the like, usually consist of pipe sections 6 to 13 meters long, with a fluid resistant inner lining. Joining of the pipes sections in order to form pipelines with the required length has always been a problem. If the inner lining is made using a material resistant to the high temperatures occurring during welding, e.g. a layer of cured epoxi paint, this protective layer consists of one or more paint layers according to each component, making up a protective layer about 250-300 microns-thick. As the protective layer thickness increases, its fragility also increases. When handling the pipes at the field, the layer can break easily, leaving the pipe metal exposed to fluids action.

An insert for connecting internally lined pipelines is known from WO 03/062691 A1. Said insert comprises an inner tubular member of plastics material to be welded by thermofusion on the respective ends of the pipe's liners; an insulating sleeve comprising a collapsible insulating material enclosed by a sheath made of a very thin sheet of steel; and a ring of heat-resistant material beneath a welding seam of the abutting pipes.

In this case, the inner tubular member has not only to be welded by means of a thermofusion process to the liners of the steel pipes, but it also restricts considerably the flow area due to the thickness of the different layers, i.e. ceramic, steel sheet, insulating material, steel sheet and plastics material.

Another welded joint is known from US-A-5 104 152. Here, the heat shield provides with the heat insulation material a heat retardant means to retard the transfer of heat during welding of the joint through (steel ring) to the corrosion resistant lining.

A method of joining pipes is described in EP-A2-0 366 299. Here, an inner plastic band is firstly welded to the plastic lining of the pipes. Therefore, the band must be able to contain suitable thermal protection from subsequent arkwelled of the pipe ends. In order to achieve such a suitable thermal protection a band of ceramic inserts is suggested. A method of joining pipes foresees only a heat shield against the heat generated during the welding process, as it does in the case of US-A-5 104 152.

If the inner lining is made of an extruded plastic material, considerably thicker, a greater resistance against mechanical damage can be obtained. However, none of these constructions allows pipe sections to be joined by welding, because the high temperatures required would destroy the inner lining, allowing the fluids to damage the steel pipes in the joint welding area.

Therefore, this kind of pipes with inner lining should be joined by means of mechanical joints, such as flanges, threaded joints, etc., causing greater cost, and increasing the risk of leaks.

The present invention is aimed at obtaining a welded joint for metal pipes, in particular steel pipes, with inner lining resistant to fluids but not to high temperatures, intended to overcome the mentioned disadvantages, i.e. avoid deterioration or destruction of the inner lining during butt welding of metal pipes, ensuring the joint sealing properties and fluid resistance.

This object is attained by means of a butt welded joint of two metal pipes according to the preamble of claim 1 which is characterized by that said second annular layer sealingly abuts the inner linings, having said second inner annular layer an inner diameter lesser than the inner diameter of the inner lining and a length greater than the distance between inner linings undercuts, forming sealing lips which sealingly abut against the inner surfaces of the inner,linings.

Since working and manufacturing tolerances often do not ensure a leak-resistant sealing contact between the inner annular layer and the pipes inner lining or said inner annular layer does not have sufficient resistance and/or sealing properties with respect to the fluid to be conveyed, the spacer ring has a second inner layer resistant to the fluid to be conveyed, which abuts sealingly against the inner lining.

According to the present invention, the second annular layer has an inner diameter lesser than the inner diameter of the inner lining and a length greater than the distance between the undercuts of the inner linings, decreasing the pipe's inner diameter in the welding area, but forming sealing lips which sealingly abut against the inner lining, ensuring greater impermeability.

This second inner layer does not need to have heat resistance nor heat insulating properties as the first inner annular layer. The outer annular layer of the spacer ring, which will heat by contact with the hot welding material, is in heat conducting contact with the pipes metal walls, therefore forming together a heat dissipator. The small rate of welding heat which could be transmitted towards the inside of the pipes generates a decreasing temperature gradient on the first inner annular layer, so that this first inner annular layer's temperature only increases slightly the time necessary to form the welding, but not affecting the second inner annular layer.

The second inner annular layer not only covers the other two annular layers of the spacer ring, but also covers a portion of the lining inner surface. This also allows the second inner annular layer to be fastened by means of adhesive, which completely avoids fluid penetration.

For those cases where the disadvantage of narrowing of the pipe's inner diameter caused by using the above-mentioned construction are not acceptable, an other embodiment of the present invention provides a welded joint in which the pipe ends to be joined are machined with a first undercut made by removing part of the length of the inner lining and full thickness of the inner lining, and forming second adjacent undercuts made by removing the length and other adjacent parts of the inner lining and part of the thickness of the inner lining; the outer layer and first inner layer of the spacer ring are inserted in the annular space between the first undercuts of the pipes ends to be joined, and the second inner annular layer is inserted in the space axially defined between the second undercuts.

This construction practically does not cause narrowing in the inner lining's pipe, ensuring at the same time a great adherence surface between the inner lining and the second inner annular layer.

In case there may be a risk that the adhesive used for adhering the inner lining pipe to the second inner annular layer cannot withstand damages caused by the different fluids to be conveyed, it has been foreseen according to the invention that the second inner annular layer has on its outer peripheral surface as well as the portions corresponding to the second undercuts, peripheral grooves to seat sealing O-rings.

Said O-rings, normally made of synthetic rubber, can ensure the sealing between the inner lining and the second inner annular layer, even though these component parts may suffer different dilatations due to pressure or temperature.

The present invention will be described in greater detail below with reference to the examples shown on the attached drawings, in which:
Figure 1 is a view of an axial section through two metal pipes with inner lining, facing each other, and other component parts of the welded joint, before assembly and welding, in particular with a detail A which is a zoomed view of the pipe's bevelled front edge.
Figure 2 is a view of the welded joint after the different component parts have been assembled and the metal pipes are welded.
Figure 3 shows an example of a welded joint, which does not belong to the invention.

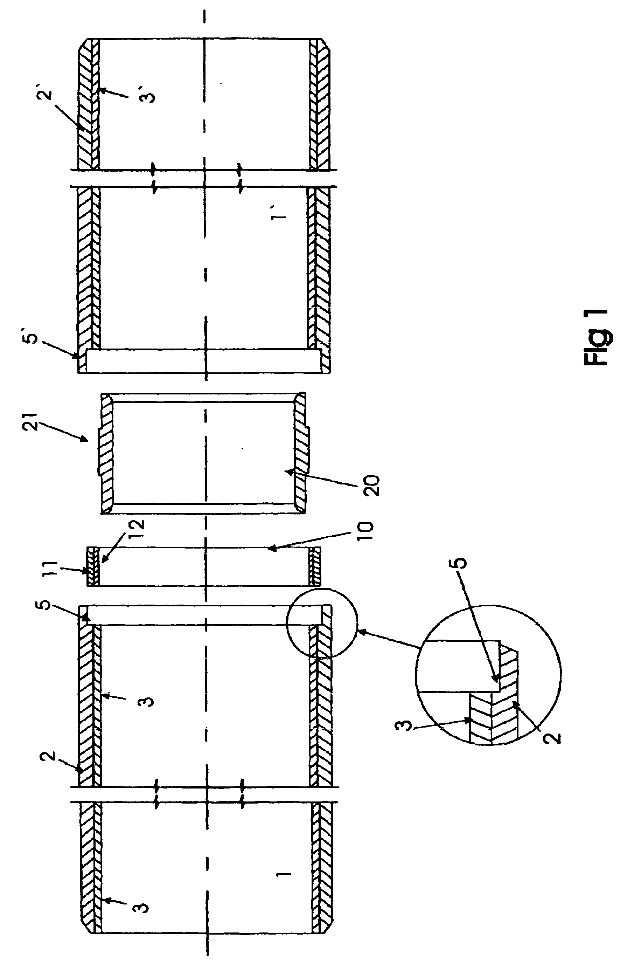

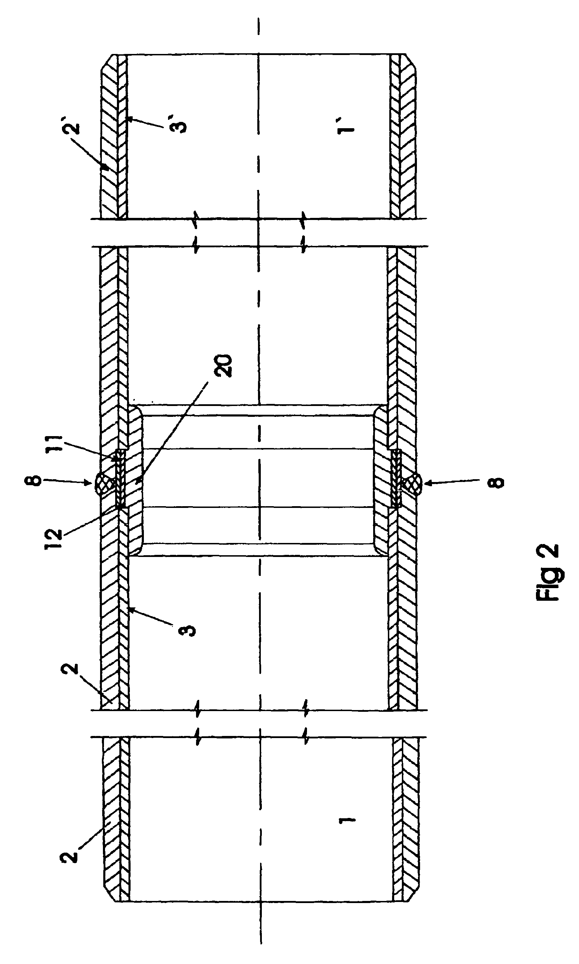

As illustrated in figures 1 and 2, pipes 1 and 1' to be joined by welding consist of an outer metal pipe, particularly of steel 2, 2', which is provided on its interior side with a lining 3, 3', of a material capable of withstanding the action of fluids to be conveyed through said pipes.

In order to carry out the joint between pipes, an undercut 5, 5' is machined on the inside of the pipe, at both ends, as shown in detail A of figure 1, removing the inner lining in a certain axial length and exposing the metal surface. Optionally, it is also possible to machine a small undercut on the inner surface of the metal pipe. At this stage, the bevel on the front edges of the metal pipe can also be cut, in a conventional manner, in order to weld the seam.

To apply the weld seam and protect the inner lining, e.g. of plastic, against the welding heat, the invention provides interposing a tubular sleeve shaped spacer ring 10, which outer diameter is substantially equal to the inner diameter of the undercut 5, 5' machined in both inner end portions of the pipes to be joined, being its axial length approximately equal or less than the sum of the axial length of the undercuts 5, 5' at the respective ends of the pipes 1, 1' to be joined.

The spacer ring 10 according to the invention is made of an outer annular layer 11 made of metal with high Thermal conductivity and at least one inner annular layer 12 of heat insulating and heat resistant material, as asbestos, glass fibers or the like.

The spacer ring 10 has a second inner annular layer 20, made of a material which can withstand fluids, but which is not heat resistant. This second inner annular layer 20 ensures continuity of the inner lining in the welded joint area.

To ensure fluid sealing of the second inner annular layer 20, an adhesive resistant to the fluids flowing through the pipes is applied on the contact surfaces.

Finally, a weld seam 8 is applied, e.g. by means of electric welding, on the periphery of the bevelled front edges of the metal pies 1, 1' to be joined.

The electric welding is carried out in a conventional manner in order to join the bevelled front edges of the metal pipes. The heat generated by welding is conducted by the outer annular metal layer 11 of the spacer ring 10 towards the inner surfaces of the undercuts 5, 5' of the metal pipes to be joined, being the heat dissipated to the outside by the outer surfaces of pipes 1, 1'.

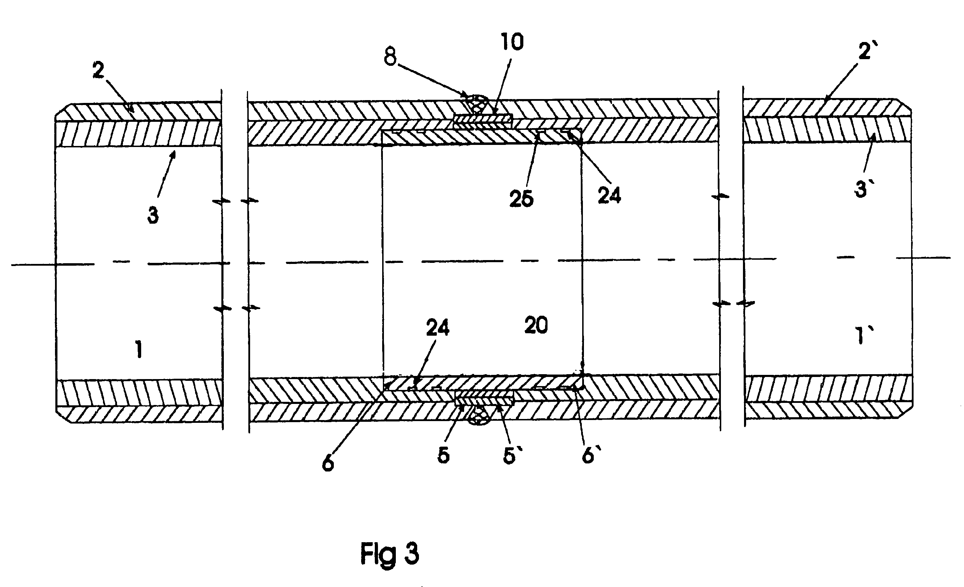

Figure 3 shows an example of a welded joint, not belonging to the present invention, with no narrowing of the tube's inner diameter in the joint area.

In this case, a second inner annular layer 20, as a tubular sleeve, is located in respective second undercuts 6, 6' which are machined on the inner lining 3, 3' by removing only a part of the whole thickness.

The inner diameter of said second inner annular layer 20 is substantially equal to the free inner diameter of the lining, its outer diameter is less than the outer diameter of lining 3, 3', in particular equal to the diameter of the second undercuts 6, 6', being its axial length substantially equal to twice the sum of the axial length of the first undercut 5, 5' and the second undercut 6, 6'.

In this case, the outer peripheral surface of the second inner annular layer 20 can lay on the insulating inner layer 12 of the spacer ring 10.

In the case the pipes shall convey different types of fluids, which eventually may damage the adhesive applied under the second inner annular layer, the invention provides peripheral grooves 24 on the outer peripheral surface of the second inner annular layer 20, in areas corresponding to the respective second undercuts 6, 6', to seat sealing O-rings 25.

### Example of application

A 1800 m-long pipelines was made using 12-m pipes. This implied the joining of 150 pipe sections, which using a conventional joint procedure by means of flanges meant a considerable additional cost. This cost can be avoided using the inventive welded joints and spacer rings. The pipelines was intended to convey a mixture of petroleum and formation water on an elevation about 100 m over the level of a pumping station.

The pipes were made of steel, having a diameter of 30 cm and wall-thickness of 6.35 mm. Before start-up, a pipe scraper was used to remove stones and boulders.

After about four months of service, the pipeline was cut in certain points in order to separate the welded joints, which were examined for deterioration. It could be verified that none of the examined joints showed damages to the inner lining, nor corrosion in the joints area. Also, the severed parts of the pipelines could easily be repaired intercalating new pipe sections and welding of the joints using the inventive technique.

## Claims

1. Welded joint for metal pipes (1, 1') with inner lining (3, 3') resistant to damages by the fluids to be conveyed, wherein the pipes (1, 1') are machined on the inside, next to the ends to be joined, radially and for a certain axial length, at least until the inner metal surface of the pipes (1, 1') is exposed, forming an undercut (5, 5') at each end of the pipe (1, 1'); the welded joint comprising the metal pipes (1,1') and a spacer ring (10); said spacer ring (10) being inserted in the hollow annular space formed by both undercuts (5, 5'), which outer diameter is substantially equal to the respective undercut's diameter, and which axial length is substantially equal to the sum of the axial lengths of the undercuts (5, 5'); and a welding seam (8) joining the ends of the metal pipes (1, 1'); said spacer ring (10) comprising an outer annular metal layer (11) with high thermal conductivity being in heat-conducting contact with the metal pipes (1, 1') within said undercuts (5, 5'), at least an inner annular layer (12) of heat insulating and heat resistant material, and a second inner annular layer (20), elastic and resistant to fluids, **characterized in that** said second annular layer (20) sealingly abuts the inner linings (3, 3'), said second inner annular layer (20) having an inner diameter lesser than the inner diameter of the inner lining (3, 3') and a length greater than the distance between inner linings undercuts (5, 5'), forming sealing lips which sealingly abut against the inner surfaces of the inner linings (3, 3').

2. Welded joint according to claim 1, **characterized in that** the pipes (1, 1') to be joined are machined at their ends, forming a first undercut) (5, 5') made by removing part of the length of the inner linings (3, 3') and full thickness of the inner linings (3, 3'), and forming second adjacent undercuts (6, 6') made by removing other adjacent parts of the length of the inner linings (3, 3') and part of the thickness of the inner linings (3, 3'); the outer annular layer of the spacer ring (10) is inserted in the annular space defined between the first undercuts (5, 5') at the facing pipes ends and the second inner annular layer (20) is inserted in the space axially defined between the second undercuts (6, 6').

3. Welded joint according to claim 2, **characterized in that** the second inner annular layer (20) is attached by means of an adhesive within the respective second undercuts (6, 6').

4. Welded joint according to claim 2, **characterized in that** the second inner annular layer (20) presents on its outer peripheral surface and on the portions corresponding with the second undercuts (6, 6'), peripheral grooves (24), in which sealing O-rings (25) are mounted.

## Patentansprüche

1. Schweißverbindung von Metallrohren (1, 1') mit Verschleißfutter (3, 3'), das widerstandsfähig gegen Schäden durch die Fluide ist, die befördert werden sollen, wobei die Rohre (1, 1') auf der Innenseite, neben den Enden, die miteinander verbunden werden sollen, radial und über eine bestimmte axiale Länge maschinell bearbeitet sind, zumindest bis die innere Metallfläche der Rohre (1, 1') offenliegt, wodurch ein Unterschnitt (5, 5') an jedem Ende des Rohrs (1, 1') ausgebildet ist; wobei die Schweißverbindung die Metallrohre (1, 1') und einen Abstandsring (10) umfasst; wobei der Abstandsring (10) in den hohlen, ringförmigen Raum eingefügt ist, der durch beide Unterschnitte (5, 5') ausgebildet ist, dessen Außendurchmesser im Wesentlichen gleich dem Durchmesser des jeweiligen Unterschnitts ist und dessen axiale Länge im Wesentlichen gleich der Summe der axialen Längen der Unterschnitte (5, 5') ist; und eine Schweißnaht (8), die die Enden der Metallrohre (1, 1') miteinander verbindet; wobei der Abstandsring (10) eine äußere ringförmige Metallschicht (11) mit hoher Wärmeleitfähigkeit, die in wärmeleitendem Kontakt mit den Metallrohren (1, 1') innerhalb der Unterschnitte(5, 5') ist, zumindest eine innere ringförmige Schicht (12) aus wärmeisolierendem und wärmebeständigem Material und eine zweite innere ringförmige Schicht (20), die elastisch und Fluiden gegenüber beständig ist, umfasst, **dadurch gekennzeichnet, dass** die zweite innere ringförmige Schicht (20) abdichtend an die Verschleißfutter (3, 3') angrenzt, wobei die zweite innere ringförmige Schicht (20) einen Innendurchmesser, der kleiner als der Innendurchmesser des Verschleißfutters (3, 3') ist, und eine Länge aufweist, die größer als der Abstand zwischen den Verschleißfutterunterschnitten (5, 5') ist, wodurch Dichtungslippen ausgebildet sind, die abdichtend an die Innenflächen der Verschleißfutter (3, 3') angrenzen.

2. Schweißverbindung nach Anspruch 1, **dadurch gekennzeichnet, dass** die Rohre (1, 1'), die miteinander verbunden werden sollen, an ihren Enden maschinell bearbeitet sind, wodurch ein erster Unterschnitt (5, 5'), der durch Entfernen eines Teils der Länge der Verschleißfutter (3, 3') und vollen Stärke der Verschleißfutter (3, 3') hergestellt ist, ausgebildet ist und zweite benachbarte Unterschnitte (6, 6'), die durch Entfernen anderer benachbarter Teile der Länge der Verschleißfutter (3, 3') und eines Teils der Stärke der Verschleißfutter (3, 3') hergestellt sind, ausgebildet sind; wobei die äußere ringförmige Schicht des Abstandsrings (10) in den ringförmigen Raum eingefügt ist, der zwischen den ersten Unterschnitten (5, 5') an den zugewandten Rohrenden definiert ist, und die zweite innere ringförmige Schicht (20) in den Raum eingefügt ist, der axial zwischen den zweiten Unterschnitten (6, 6') definiert ist.

3. Schweißverbindung nach Anspruch 2, **dadurch gekennzeichnet, dass** die zweite innere ringförmige Schicht (20) mithilfe eines Klebstoffs innerhalb der jeweiligen zweiten Unterschnitte (6, 6') angebracht ist.

4. Schweißverbindung nach Anspruch 2, **dadurch gekennzeichnet, dass** die zweite innere ringförmige Schicht (20) auf ihrer äußeren Umfangsfläche und auf den Abschnitten, die den zweiten Unterschnitten (6, 6') entsprechen, umfängliche Nute (24) aufweist, in der O-Dichtungsringe (25) angebracht sind.

## Revendications

1. Joint soudé pour tuyaux métalliques (1, 1') qui présente un revêtement interne (3, 3') résistant aux dégâts causés par les fluides qu'ils doivent transporter,
la face interne des tuyaux (1, 1') étant usinée radialement et sur une certaine longueur axiale à côté des extrémités qui doivent être jointes, au moins jusqu'à ce que la surface métallique interne des tuyaux (1, 1') soit exposée, en formant une diminution d'épaisseur (5, 5') à chaque extrémité du tuyau (1, 1'),
le joint soudé comprenant les tuyaux métalliques (1, 1') et un anneau intermédiaire (10),
ledit anneau intermédiaire (10) étant inséré dans l'espace du creux annulaire formé par les deux diminutions d'épaisseur (5, 5'), son diamètre externe étant essentiellement égal au diamètre des diminutions d'épaisseur et sa longueur axiale étant essentiellement égale à la somme des longueurs axiales des diminutions d'épaisseur (5, 5'),
et un bourrelet de soudure (8) joignant les extrémités des tuyaux métalliques (1, 1'),
ledit anneau intermédiaire (10) comprenant une couche métallique annulaire externe (11) à haute conductivité thermique en contact de conduction thermique avec les tuyaux métalliques (1, 1') dans lesdites diminutions d'épaisseur (5, 5'),
au moins une couche annulaire interne (12) de matériau thermiquement isolant et résistant à la chaleur et une deuxième couche annulaire interne (20), élastique et résistante aux fluides,
**caractérisé en ce que**
ladite deuxième couche annulaire (20) vient buter de façon étanche contre les revêtements internes (3, 3'),
**en ce que** ladite deuxième couche annulaire interne (20) a un diamètre interne plus petit que le diamètre interne du revêtement interne (3, 3') et une longueur plus grande que la distance entre les diminutions d'épaisseur (5, 5') des revêtements internes et forme des lèvres d'étanchéité qui viennent buter de façon étanche contre la surface interne des revêtements internes (3, 3').

2. Joint soudé selon la revendication 1, **caractérisé en ce que** les tuyaux (1, 1') qui doivent être joints sont usinés à leurs extrémités, en formant une première diminution d'épaisseur (5, 5') en enlevant une partie de la longueur des revêtements internes (3, 3') et toute l'épaisseur des revêtements interne (3, 3') et en formant des deuxièmes diminutions d'épaisseur adjacentes (6, 6') en enlevant d'autres parties adjacentes de la longueur des revêtements internes (3, 3') et une partie de l'épaisseur des revêtements internes (3, 3'),
**en ce que** la couche annulaire externe de l'anneau intermédiaire (10) est insérée dans l'espace annulaire défini entre les premières diminutions d'épaisseur (5, 5') des extrémités des tuyaux qui se font face et la deuxième couche annulaire interne (20) est insérée dans l'espace défini axialement entre les deuxièmes diminutions d'épaisseur (6, 6').

3. Joint soudé selon la revendication 2, **caractérisé en ce que** la deuxième couche annulaire interne (20) est fixée au moyen d'un adhésif dans les deuxièmes diminutions d'épaisseur respectives (6, 6').

4. Joint soudé selon la revendication 2, **caractérisé en ce que** la deuxième couche annulaire interne (20) présente sur sa surface périphérique externe et sur les parties qui correspondent aux deuxièmes diminutions d'épaisseur (6, 6') des rainures périphériques (24), dans lesquelles on place des joints toriques d'étanchéité (25).
